# EUROPEAN PATENT APPLICATION

(11) **EP 4 840 703 A1**
(43) Date of publication of application: **18.11.2026**
(21) Application number: 25176797.6
(22) Date of filing: 15.05.2025
(51) Int. Cl.: B60R 21/207, B60R 21/2338

(54) **A CONNECTOR TO BE USED IN A SAFETY SYSTEM TO BE MOUNTED ON A VEHICLE SEAT, A SAFETY SYSTEM AND THE USE OF SUCH CONNECTOR**

(71) Applicant: Autoliv Development AB, 447 83 Vårgårda (SE); RENAULT s.a.s., 92100 Boulogne-Billancourt (FR)
(72) Inventor: Ribillard, Damien, 76220 Gournay-en-Bray (FR); Hellot, Laurent, 76220 Gournay-en-Bray (FR); Broggini, Laurent, 76220 Gournay-en-Bray (FR); Lengaigne, Laurent, 76220 Gournay-en-Bray (FR); Charpentier, Frederic, 76220 Gournay-en-Bray (FR); Gailhard, Carole, 76220 Gournay-en-Bray (FR); Halgrin, Julien, 76220 Gournay-en-Bray (FR); Ruffet, Renaud, 78280 Guyancourt (FR)
(74) Representative: AWA Sweden AB

(57) **Abstract**

A connector (401-405) to be used in a safety system to be mounted on a vehicle Seat is provided. The connector (401-405) comprises a belt connecting portion (410) and a cord connecting portion (430). The belt connecting portion (410) comprises a through-going slot (411) configured to receive a belt (210). The cord connecting portion (430) forming part of a locking system is configured to connect a loop-shaped end portion (311) of a cord (310) to the connector (401-405). Also, a safety system to be mounted on a vehicle seat is provided. Further, the invention refers to the use of such connector.

## Description

### Technical field

The present invention refers to a connector to be used in a safety system to be mounted on a vehicle seat, a safety system to be mounted on a vehicle seat, and the use of such connector to interconnect a belt with a cord, said belt and cord forming part of a safety system to be mounted on a vehicle seat.

### Technical background

It is well known to use airbags in vehicles to protect seated passengers. The airbags are traditionally supported by the vehicle body's frame structure. It is also known to have airbags integrated in the seat structure. This allows the passenger to be protected no matter seat position. The seat integrated airbags may by way of example be arranged on one lateral side of the seat back, or on opposing lateral sides of the seat back. The lateral airbag is typically supplemented with a wrap-around belt that extends from an upper portion of a seatback, across the packed airbag and to a tensioning device that is arranged underneath the vehicle seat. In the event of an accident, the belt is configured to be tensioned by the belt tensioning device and form a reaction surface to the airbag as it is inflated and deployed. The reaction surface promotes the airbag to be deployed in a direction towards the seat and the seated person.

The airbag system and the tensioning device are typically provided as separate units and not always by one and the same supplier. The units are assembled and mounted to the vehicle seat. Since the units are part of a safety system, it is essential that the two units can be easily connected in an intuitive and fail-proof manner when mounted to a vehicle seat. It is also essential that the connection can withstand the forces involved during the tensioning should there be an accident.

### Summary

It is an object of the present invention to provide a connector that is easy and intuitive to handle when installing a safety system using such connector to a vehicle seat.

Another object is that the connector should not interfere with, but easily conform to and follow the three-dimensional shape of the vehicle seat.

The solution should strive to avoid that the connector interferes with other features in the vehicle seat and in the worst-case scenario gets pinched.

These and other objects that will be apparent from the following summary and description are achieved by a connector to be used in a safety system to be mounted on a vehicle seat, the connector comprising a belt connecting portion and a cord connecting portion; said belt connecting portion comprising a through-going slot configured to receive a belt; and said cord connecting portion forming part of a locking system configured to connect a loop-shaped end portion of a cord to the connector.

Accordingly, a connector is provided that allows a simple, and reliable interconnection of two members having different cross sections and physical properties.

The term *"belt"* should in the context of the invention be understood as a long, slender band having a rectangular or substantially rectangular cross section. The belt may by way of example have a homogenous, extruded cross section or be a woven structure. The belt may also be referred to as a web.

The term *"cord"* should in the context of the invention be understood as a long, slender cable, rope, wire, string or even a chain. The cross section may by way of example be circular or substantially circular. The cord may have a homogenous cross section or be made up of several strands that are twisted or woven together.

The belt, which as such has a substantially rectangular cross section with two opposing, generally flat surfaces, may form a relatively wide and large reaction surface to the airbag upon inflation and deployment thereof. Further, the cord, which as such has a circular or substantially circular cross section, will more easily conform to and accommodate the different spatial, three-dimensional extensions that apply as seen along the lateral side of the vehicle seat with the seat back connecting to the seat pan, and not at least when connecting the restricting member to the tensioning device that typically is arranged centrally underneath the vehicle seat.

By the connector comprising a slot that is configured to receive the belt, the slot can act as a hinge point where the belt is allowed to bend about a longitudinal edge portion of the slot. The slot preferably has a straight-linear extension that corresponds to or slightly exceeds a width of the belt. This allows the belt to easily conform to the surface extension of the item that is abuts, before, during and after inflation of an airbag.

The connector as such may be formed by injection moulding or over-moulding a pre-formed core. The core may as such be formed by metal or a composite material. By injection moulding/over-moulding, any sharp corners/edges can effectively be removed. The risk of undue wear of the belt/cord over time can thereby be avoided.

The connector can be supplied to an installation site pre-mounted to the web. The mounting of the connector to the belt may be made by inserting a free end of the belt into the slot, folding back the free end of the belt into an overlapping relation with the belt and finally joining the thus formed overlapping wall portions of the belt by at least one joint extending in a direction transverse the longitudinal direction of the belt. The joint can also be referred to as a seam. The joint may be formed by sewing, welding or adhesive bonding, or even by a combination of any of those.

The cord connecting portion may comprise a first member and a second member, said second member being configured to be arranged to overlap the first member and to be fixated to the first member to thereby secure the loop-shaped end portion of the cord to the connector in an interface between the first member and the second member.

The term *"secure"* should in the context of the application be understood as that the cord is prevented from being pulled off from the connector. The securing may in one embodiment be provided as a rigid connection so that the cord is clamped between the first member and the second member. The securing may in another embodiment be provided so that the loop-shaped end portion is prevented from being pulled off, but still may pivot in view of the connector.

The first member and/or the second member may comprise a groove, said groove being configured to receive at least a portion of the loop-shaped end portion of the cord.

The groove may have a shape that at least partly corresponds to the loop-shaped end portion of the cord. The groove may be formed in one member only or in both the first and second members.

The first and second members may together be configured to define a cord receiving channel having a width that exceeds a diameter of the cord as measured along the loop-shaped end portion of the cord. By the width of the channel exceeding the diameter of the loop-shaped end portion of the cord, the loop-shaped end portion is allowed to slightly move, such as pivot, while still being secured to the connector.

The second member may be hingedly connected to the connector, and the second member may be configured to be secured to the first member by a screw and/or a snap-fit coupling in a condition when the second member is arranged to overlap the first member.

The second member may hence be formed as a hinged lid that connects to the first member. The connector may thereby be formed in one unitary piece by moulding.

The second member may be a member separate from the connector, and the second member may be configured to be secured to the first portion by a screw and/or a snap-fit coupling in a condition when the second member is arranged to overlap the first member.

The locking system may in one embodiment comprise a first channel and a second channel that are arranged in the cord connecting portion of the connector, the first and second channels being aligned one after the other, and the cord connecting portion may comprise a cut-out that forms a gap that longitudinally separates the first and second channels. The locking system may further comprise a locking pin, said locking pin being configured to be inserted through the first channel, through the loop-shaped end portion of the cord and through the second channel to thereby lockingly engage the cord to the connector.

The connection of the cord to the connector is accordingly in this embodiment made by means of a locking pin that is arranged to extend through the two channels and the intermediate loop-shaped end portion of the cord. A hinge-like connection is thereby formed between the connector and the cord. Due to the orientation of the channels, the locking pin will extend transverse the longitudinal direction of not only the connector but also the belt and the cord. It will thereby not negatively impact the ability of the interconnected members to conform to the vehicle seat. It also reduces the risk of the connector getting pinched. Also, the operation of the connection arrangement is very intuitive.

Each channel has an insert opening and an exit opening. The exit opening of the first channel is facing the insert opening of the second channel.

The connector may in one embodiment be supplied with the locking pin already being inserted to the first channel so that a leading end of the pin is arranged adjacent or in the gap of the cut-out that separates the first and the second channels.

The locking system may further comprise an insert to be connected to the loop-shaped end portion of the cord, and the locking pin may be configured to be inserted through the first channel, through the insert and through the second channel to thereby lockingly engage the cord to the connector.

The insert may be supplied to an installation site pre-mounted to the loop-shaped end portion of the cord. The insert facilitates guiding of the locking pin during insertion thereof. The insert may be used to reduce friction and friction-related noise between the cord and the locking pin.

The insert may comprise a hollow bushing that is configured to extend through the loop-shaped end portion of the cord, and the locking pin may be configured to extend through said hollow bushing. The bushing may be used to reduce friction and friction-related noise between the cord and the locking pin.

The insert may comprise a first flange and a second flange, and one end of the bushing may be fixedly connected to the first flange and a second end of the bushing may be configured to be connected to the second flange by a snap-fit coupling.

This allows a simplified mounting of the insert to the loop-shaped end portion. Also, the first and second flanges limit axial movement of the loop-shaped end portion of the cord along the longitudinal extension of the locking pin. This reduces friction and friction-related noise between the cord and the locking pin.

The insert may comprise at least one protrusion configured to be received in a complementary recess in the cord connecting portion of the connector. Alternatively, the insert may comprise at least one recess configured to receive a complementary protrusion in the cord connecting portion of the connector.

The engagement between the protrusion(s) and recess(es) facilitates the mounting of the cord to the connector during the insertion of the locking pin.

The at least one recess may be configured to lockingly engage the protrusion by a snap-fit coupling.

The belt or the cord may support a flexible sheath, said flexible sheath being configured to be pulled from said supporting member, i.e., either the belt or the cord, towards the other member to thereby cover at least a portion of both the belt and the cord as seen in a condition when the belt and the cord are connected by the connector.

The flexible sheath will prevent the connecting arrangement from causing undue wear of the seat back during the life length of the vehicle.

According to another aspect, the invention refers to a safety system to be mounted on a vehicle seat, the safety system comprising:
an airbag assembly configured to be supported by a lateral side of a vehicle seat, said airbag assembly comprising a folded and/or rolled airbag and a wrap-around restriction member extending across the airbag and configured to form a reaction surface upon inflation and deployment of the airbag;
a tensioning device comprising an actuator which upon activation is configured to pull a tensioning member; and
a connector with the features according to any of claims 1-12, wherein the through-going slot in the belt connecting portion of the connector is configured to receive a belt forming part of the wrap-around restriction member and wherein the cord connecting portion of the connector is configured to connect to a loop-shaped end portion of a cord being part of the tensioning member.

Accordingly, a safety system is provided which as such comprises an airbag assembly that will deploy upon inflation. To better control the deployment to provide a desired protection of a seated passenger, a wrap-around restriction member extends across the airbag. The wrap-around restriction member is configured to form a reaction surface to the airbag as it is deployed. This is made by tensioning the wrap-around restriction member. The tensioning is made by an actuation of the tensioning device which is configured to connect to the wrap-around restriction member via the connector.

The connector allows the airbag assembly and the tensioning device to be handled as separate units that are interconnected either before or during mounting to the vehicle seat. The airbag assembly may be contained prepacked, i.e. rolled and/or folded together with the wrap-around restriction member, in a casing where the only portion protruding from the casing is a free end of the wrap-around restriction member, i.e. the belt, to which the connector is attached. Correspondingly, the tensioning device may be provided as one unit where a free end of its cord that constitutes a tensioning member is provided with a loop-shaped end portion. The two units may be mounted separately to the vehicle seat in their spatially different locations, one typically along a longitudinal side portion of the seat back and one typically below the seat panel. Once mounted, the first and second members are interconnected by means of the connector.

The features and advantages discussed above in view of the connector are equally and directly applicable to the safety system using such connector. Hence, for the sake of efficiency and to avoid undue repetition, reference is made to the sections above.

It is preferred that the wrap-around restriction member (the belt) and the tensioning member (the cord) have such lengths that the connector can be arranged in such position that it does not interfere with the functionality of the vehicle seat or any guide brackets that are used for guiding the tensioning member from the lower side of the seat panel towards the seat back.

The tensioning device may comprise an actuator and a pulling arrangement. The actuator may be a pyrotechnically operated piston which in one end is connected to the pulling arrangement. In the event an accident should be detected by one or more sensors of the vehicle and where the ECU (Electrical Control Unit) of the vehicle determines that the accident could be mitigated by the associated lateral airbag, the airbag is inflated while also the tensioning device is activated to tension the wrap-around restriction member to thereby form a reaction surface to the airbag as it is inflated and deployed.

According to yet another aspect, the invention refers to the use of a connector with the features according to any of claims 1-12 to interconnect a belt with a cord, said belt and cord forming part of a safety system to be mounted on a vehicle seat.

The features and advantages discussed above in view of the connector and the safety system using such connector are equally and directly applicable to the use of such connector. Hence, for the sake of efficiency and to avoid undue repetition, reference is made to the sections above.

According to yet another aspect, a vehicle seat is provided in which a first safety system according to claim 13 is arranged on a first lateral side of the vehicle seat, and a second safety system according to claim 13 is arranged on a second lateral side of the vehicle seat. The first and the second safety systems may have the same design and functionality. The features and advantages discussed above in view of the first seat-mounted airbag assembly are equally and directly applicable to the second seat-mounted airbag assembly. Hence, for the sake of efficiency and to avoid undue repetition, reference is made to the sections above.

The airbag assemblies are preferably arranged on opposite lateral sides of the vehicle seat to thereby provide a protection to the seated passenger from two opposite sides, one from the near side (closest to the door) and one from the far side (towards the longitudinal centreline of the vehicle). At least one of the two lateral airbags may be designed to deploy to form a frontal protection to thereby protect the chest portion and also provide a facial protection. The first and the second lateral airbags may be symmetric.

The wrap-around restricting member of the first airbag assembly and the wrap-around restricting member of the second airbag assembly may connect to a common tensioning device.

The common tensioning device may be arranged centrally on the lower side of the seat pan or underneath the vehicle seat. By being centrally arranged, the tensioning of the first and second wrap-around restricting members will be substantially uniform.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an, " "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief description of the drawings

The invention will be described in more detail with reference to the appended schematic drawings, which show examples of a presently preferred embodiment of the invention.
Fig. 1 is a schematic overview of one embodiment of a vehicle seat with two seat-mounted airbag assemblies, each comprising a lateral airbag arranged in the seat back.
Fig. 2 is a schematic front view of one embodiment of a vehicle seat with two seat-mounted airbag assemblies where the two airbags have been deployed.
Fig. 3 is a schematic side view of a vehicle seat with two seat-mounted airbag assemblies where the airbags have been deployed.
Figs. 4A-C disclose the design and operation of a first embodiment of the connector according to the invention.
Figs. 5A-C disclose the design and operation of a second embodiment of the connector according to the invention.
Figs. 6A-6D disclose the design and operation of a third embodiment of the connector according to the invention.
Figs. 7A-7C disclose the design and operation of a fourth embodiment of the connector according to the invention using an insert and a locking pin.
Figs. 8A-8B disclose the design and operation of a fifth embodiment of the connector according to the invention using an insert and a locking pin.
Fig. 9 is a schematic overview of a safety system according to the invention as mounted to a vehicle seat.

### Detailed description

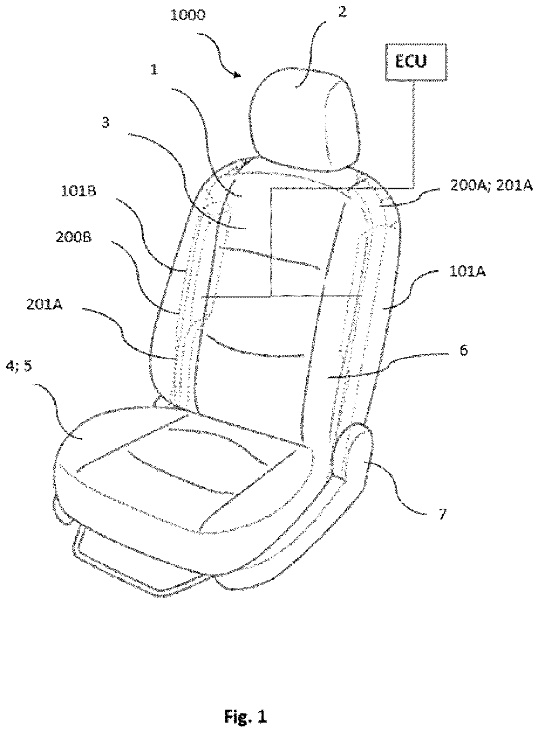

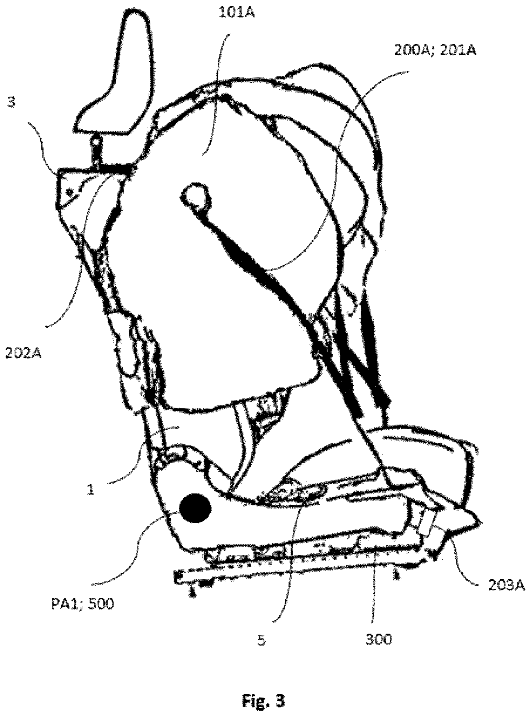

Starting with Fig. 1, one embodiment of a vehicle seat 1 with two seat-mounted airbag assemblies 1000 with a first and a second lateral airbag 101A; 101B is schematically disclosed. The vehicle seat 1 comprises a head rest 2, a seat back 3 and a seat cushion 4 supported by a seat pan 5. A trimming 7 extends along the opposing lateral sides of the seat cushion 4. The seat pan 5 is arranged inside the vehicle seat 1 below the seat cushion 4 and is hence not visible in Fig. 1 but can be seen in Fig. 3. Each lateral side of the seat back 3 comprises an airbag 101A; 101B. A wrap-around restricting member 200A, 200B extends along an outer surface of each lateral airbag 101A; 101B. As will be described below, the wrap-around restricting member 200A, 200B comprises at least one longitudinal member that extends from an upper end of the seat back 3, along the outer lateral side of the seat back 3, along the seat pan 5 and down to a tensioning device 300 that is arranged underneath the vehicle seat 1. The tensioning device 300 is hidden underneath the vehicle seat 1 but can be seen in Fig. 3.

The airbags 101A; 101B and wrap-around restricting members 200A, 200B are arranged inside an upholstery 6. The upholstery 6 is configured to rupture as the airbags 101A; 101B are inflated and deployed.

Each airbag 101A; 101B is connected to an inflator (not illustrated) which in turn is connected to an Electrical Control Unit (ECU). This is all well known to the skilled person and not further discussed.

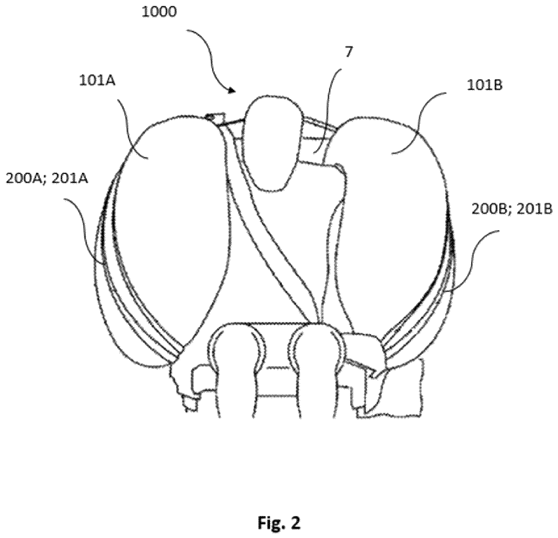

Turning to Fig. 2, the seat-mounted airbag assemblies 1000 are disclosed in a condition where the two lateral airbags 101A; 101B have been inflated and fully deployed. The two airbags 101A; 101B are disclosed as being mirrored, i.e., having the same design on both sides of the vehicle seat 1. The skilled person realizes that the airbags 101A; 101B may be designed in a number of different ways depending on which parts of the body of the seated passenger they are intended to protect. As a non-limiting example, the airbags 101A; 101B may be designed to provide not only a sidewards protection, but also a frontal protection. Also, it is to be understood that the two airbags 101A; 101B may have different designs. It is further to be understood that one of the airbags 101A; 101B may be omitted. The seat-mounted airbag assembly 1000 may accordingly comprise one lateral airbag 101A; 101B only.

The first lateral airbag 101A is associated with the first wrap-around restricting member 200A and the second lateral airbag 101B is associated with the second wrap-around restricting member 200B. The at least one longitudinal member 201A, 201B of each wrap-around restricting member 200A, 200B is configured to be tensioned and form a reaction surface to its associated airbag 101A; 101B when the airbag is inflated and deployed.

As can be seen in Fig. 2, each wrap-around restricting member 200A, 200B may comprise more than one longitudinal member 201A, 201B. Fig. 2 discloses an embodiment where each wrap-around restricting member 200A, 200B comprises two longitudinal members 201A; 201B that run side by side. The wrap-around restricting members 200A, 200B connect to one and the same tensioning device (omitted in Fig. 2). It is to be understood that each wrap-around restricting member 200A, 200B may connect to its own tensioning device. The wrap-around restricting members 200A, 200B are formed by belts.

Now turning to Fig. 3, a side view of a vehicle seat 1 is disclosed. The vehicle seat 1 is disclosed in a condition where the lateral airbags have been inflated and fully deployed. The arrangement may have the same design and functionality on both sides of the seat. Only one of the two is discussed below.

The trimming 7 on the vehicle seat 1 (see Fig. 1) has been removed to better illustrate the seat pan 5 and the tensioning device 300.

The seat back 3 connects to the seat pan 5 via a rear seat pan cross member 500 that extends between two opposing lateral side members of the seat pan 5 and pivotably connects the seat back 3 to the seat pan 5 in pivot point PA1.

The wrap-around belt restricting member 200A comprises the longitudinal member 201A having an upper end 202A that is fixedly connected to a top portion of the seat back 3, and a lower end 203A that is indirectly fixedly connected to the tensioning device 300 that is arranged underneath the vehicle seat 1. As given above, the wrap-around belt restricting member 200A may comprise more than one longitudinal member 201A. Fig. 3 discloses two longitudinal members 201A formed as belts that merge into one belt that connects to the tensioning device 300. Only one longitudinal member 201A will be described in detail below. It is to be stressed that the wrap-around belt restricting member may comprise one longitudinal member only or more than two longitudinal members.

The longitudinal member 201A extends along an exterior side of the inflated airbag 101A. The longitudinal member 201A is disclosed as having a substantially flat cross section along its contact surface with the airbag 101A. The longitudinal member 201A forms a reaction surface to the associated airbag 101A during inflation and deployment of the airbag 101A. The longitudinal member 201A may be seen as an external tether that forces the airbag 101A to conform to the body of the seated passenger.

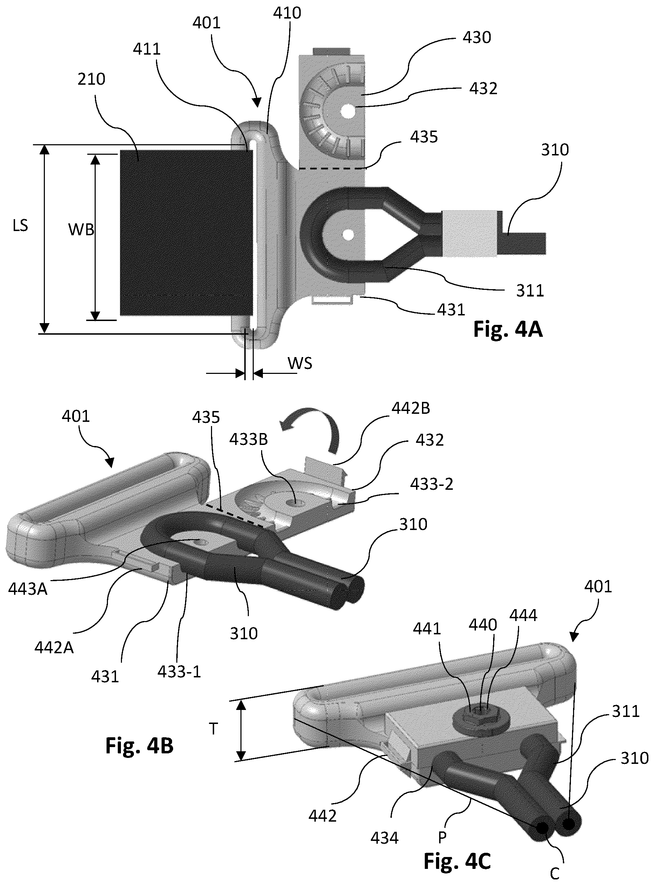

Now turning to Figs. 4A-4C, the design and operation of a first embodiment of the connector 401 according to the invention is schematically disclosed.

Starting with Fig. 4A a top view of the connector 401 is shown together with a schematically disclosed portion of a belt 210 and a cord 310. The belt 210 is part of the longitudinal member 201 of the wrap-around belt restricting member 200 that has been described above. The belt 210 may be a long, slender band having a rectangular or substantially rectangular cross section. The belt 210 may by way of example have a homogenous, extruded cross section or be a woven structure. The belt 210 may also be referred to as a web.

The cord 310 is part of the tensioning device 300 that has been described above. Hence, the connector 401 is configured to operatively interconnect a wrap-around belt restricting member 200 with a tensioning device 300. The cord 310 may be a long, slender cable, rope, wire, string or even a chain. The cross section may by way of example be circular or substantially circular. The cord 310 may have a homogenous cross section or be made up of several strands that are twisted or woven together. The cord 310 is provided with a loop-shaped end portion 311. The loop-shaped end portion 311 is used when connecting the cord 310 to the connector 400 as will be further described below.

The connector 401 is formed as a unitary body which comprises a belt connecting portion 410 and a cord connecting portion 430. The connector 401 as such may be formed by injection moulding or over-moulding a pre-formed core. The core (omitted in Figs 4A-4C) may as such be formed by metal or a composite material. By injection moulding/over-moulding, any sharp corners/edges can effectively be removed. The risk of undue wear of the belt/cord over time can thereby be avoided.

The belt connecting portion 410 comprises a through-going slot 411 that is configured to receive the belt 210. The slot 411 has a length LS that exceeds a width WB of the belt 210 to be received through the slot 411, and a width WS that exceeds a thickness of the belt 210 to be received through the slot 411. The belt 210 can thereby move freely in the slot 411.

The connector 401 can be supplied to an installation site pre-mounted to the belt 210. The mounting of the connector 400 to the belt 210 may be made by inserting a free end of the belt 210 into the slot 411, folding back the free end of the belt into an overlapping relation with the belt and finally joining the thus formed overlapping wall portions of the belt by at least one joint (omitted) extending in a direction transverse the longitudinal direction of the belt. The joint can also be referred to as a seam. The joint may be formed by sewing, welding or adhesive bonding, or even by a combination of any of those.

The slot 411 can be seen as a hinge point for the belt 210 where the belt is allowed to bend about a longitudinal edge portion of the slot. The slot 411 preferably has a straight-linear extension with a width that corresponds to or slightly exceeds the width WB of the belt 210. This allows the belt to easily conform to surface extension of the item that is abuts, before, during and after inflation of an airbag.

The cord connecting portion 430 comprises a first member 431 and a second member 432. The first and second members 431, 432 do each comprise a groove 433-1, 433-2. The grooves 433-1, 433-2, best seen in Fig. 4B, are configured to receive at least a portion of the loop-shaped end portion 311 of the cord 310.

The grooves 433-1, 433-2 may each have a shape that at least partly corresponds to the loop-shaped end portion 311 of the cord 310.

The two grooves 433-1, 433-2 are configured to together define a cord receiving channel 434, see Fig. 4C, having a width that exceeds a diameter of the cord as measured along the loop-shaped end portion 311 of the cord 310. The loop-shaped end portion 311 is thereby allowed to slightly move, such as pivot, while still being secured to the connector 400.

The cord receiving channel 434 is preferably positioned so that a centreline C of the cord 310, as seen when the cord is secured to the connector 401, coincides with a virtual plane P that is arranged in level with half of the thickness T of the belt connecting portion 410. This is highly schematically illustrated in Fig. 4C. This provides a substantially linear force absorption in the event the cord should be pulled by a tensioning device.

The second member 432 is hingedly connected to the first member 431 via a hinge 435. The connector 401 may thereby be formed in one unitary piece by moulding. The second member 432 is, see Figs. 4B and 4C, configured to be arranged to overlap the first member 431 and to be fixated to the first member 431 to thereby secure the loop-shaped end portion 311 of the cord 310 to the connector 401 in an interface between the first member 431 and the second member 432.

Now turning to Figs. 4B and 4C. The second member 432 is in the disclosed embodiment configured to be secured to the first member 431 by a locking system 440 in the form of a screw 441 and/or a snap-fit coupling 442. The first and second members 431, 432 are each disclosed as comprising a respective hole 443A, 443B. The two holes 443A, 443B are positioned so that they can be aligned to form a common through-going hole 444 when the first and second members 431, 432 are pivoted into an overlapping condition, see Fig. 4C. As a supplement to the screw 441, an edge portion of the first and second member is provided with a respective part 442A, 442B of the snap fit coupling 442.

The cord 310 is, when mounted to the connector 401, prevented from being pulled off from the connector. The securing may in one embodiment be provided as a rigid connection so that the cord is clamped between the first member and the second member. The securing may in another embodiment be provided so that the loop-shaped end portion still may slightly pivot in view of the connector.

The skilled person realizes that the position and number of holes 444; 443A, 443B may be changed with remained functionality. Also, the skilled person realises that the snap-fit coupling 442 may be designed in a number of ways with remained functionality. It can be omitted, or even replace the provision screw holes.

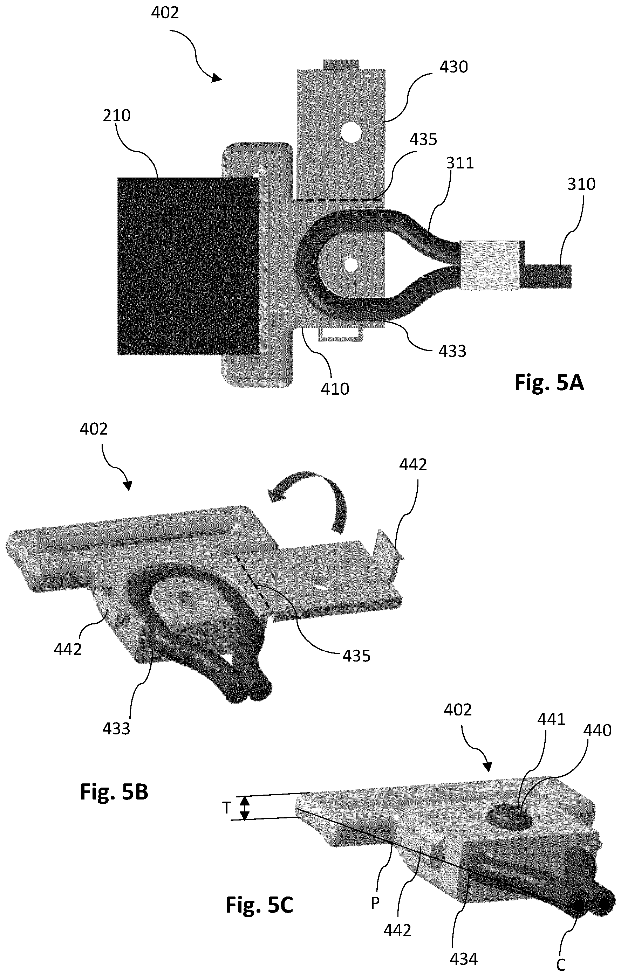

Now turning to Figs. 5A-5C, the design and operation of a second embodiment of the connector 402 according to the invention is schematically disclosed. The connector 402 differs from the first embodiment that has been described above in view of Figs. 4A-4C in that only one of the first and second members 410, 430 making up the connector 402 is provided with a groove 433 that is configured to receive the loop-shaped end portion 311 of the cord 310.

The groove 433 has a shape that corresponds to the loop-shaped end portion 311 of the cord 310. The groove 433 has a depth that exceeds a diameter of the cord 310 as measured along the loop-shaped end portion 311 of the cord 310. The loop-shaped end portion 311 is thereby allowed to slightly move, such as pivot, while still being secured to the connector 402. The skilled person realises that the groove 433 with remained functionality instead may be arranged in the second member 430.

The second member 432 is hingedly connected to the first member 431 in a hinge 435. The second member 432 is, see Figs. 5B and 5C, configured to be arranged to overlap the first member 431 and to be fixated to the first member 431 to thereby secure the loop-shaped end portion 311 of the cord 310 to the connector 402 in an interface between the first member 431 and the second member 432. The second member 432 is hence formed as a hinged lid that connects to the first member 431.

Now turning to Fig. 5C. The second member 432 is in the disclosed embodiment configured to be secured to the first member 431 by a locking system 440 in the form of a screw 441 and/or a snap-fit coupling 442. The locking system is of the same type that has been described above with reference to Figs. 4A-4C. Reference is made to that discussion to avoid undue repetition.

Like in the first embodiment, the cord receiving channel 434 is preferably positioned so that a centreline C of the cord 310, as seen when the cord is secured to the connector 402, coincides with a virtual plane P that is arranged in level with 50% of the thickness T of the belt connecting portion. This is highly schematically illustrated in Fig. 5C.

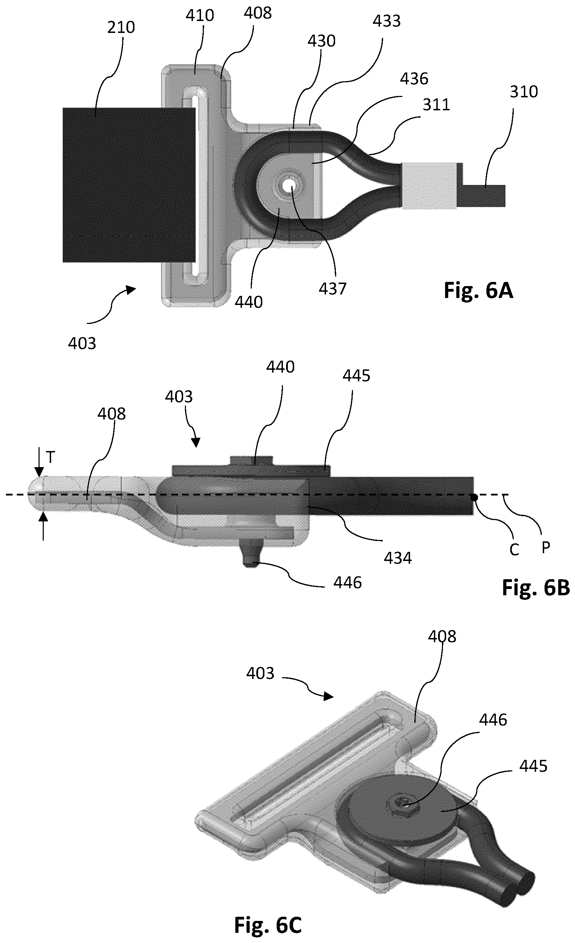

Now turning to Figs. 6A-6C, the design and operation of a third embodiment of the connector 403 according to the invention is schematically disclosed.

Starting with Fig. 6A a top view of the connector 403 is shown together with a schematically disclosed portion of a belt 210 and a cord 310.

The connector 403 is formed as a unitary body which comprises a belt connecting portion 410 and a cord connecting portion 430. The belt connecting portion 410 has the same design that has been discussed above with reference to Figs. 4A-4C. Reference is made to that discussion to avoid undue repetition.

The cord connecting portion 430 comprises a groove 433 that is configured to receive at least a portion of a loop-shaped end portion 311 of the cord 310. The groove 433 has a shape that at least partly corresponds to the loop-shaped end portion 311 of the cord 310. The groove 433 has a depth that exceeds a diameter of the cord 310 as measured along its loop-shaped end portion 311. The loop-shaped end portion is thereby allowed to slightly move, such as pivot, while still being secured to the connector.

The cord connecting portion 430 further comprises a support surface 436 which is part of a locking system 440 of the connector 403. The support surface 436 comprises a through-going hole 437. The locking system further comprises a disc-shaped member 445 and a locking pin 446. The disc-shaped member 445, being separate from the connector 402, is configured to be secured to the support surface 436 of the first member 430 by the locking pin 446 in a condition when the disc shaped member 445 member is arranged to abut the cord connecting portion 430. The locking pin 446 may be designed to provide a snap-fit coupling by being configured to be pushed into a locking engagement with the cord connecting portion 430. The locking pin 446 may alternatively be formed as a screw.

It is to be stressed that although the disc-shaped member is disclosed as being connected to the cord connecting portion 430 in one point, i.e. via one hole, the skilled person realises that two or more connecting points may be used.

The cord 310 is, when mounted to the connector 403, prevented from being pulled off from the connector. The securing may in one embodiment be provided as a rigid connection so that the cord is clamped between the first member and the second member. The securing may in another embodiment be provided so that the loop-shaped end portion 311 still may slightly pivot in view of the connector 402.

This third embodiment discloses one example where the connector 403 comprises a core 408 that is over-moulded. The core 408 may by way of example be formed by metal or by a composite material. This way of co-moulding a connector can be applied to all embodiments.

Like in the first embodiment, the cord receiving channel 434 is preferably positioned so that a centreline C of the cord 310, as seen when the cord is secured to the connector 403, coincides with a virtual plane P that is arranged in level with half of the thickness T of the belt connecting portion. This is highly schematically illustrated in Fig. 6B.

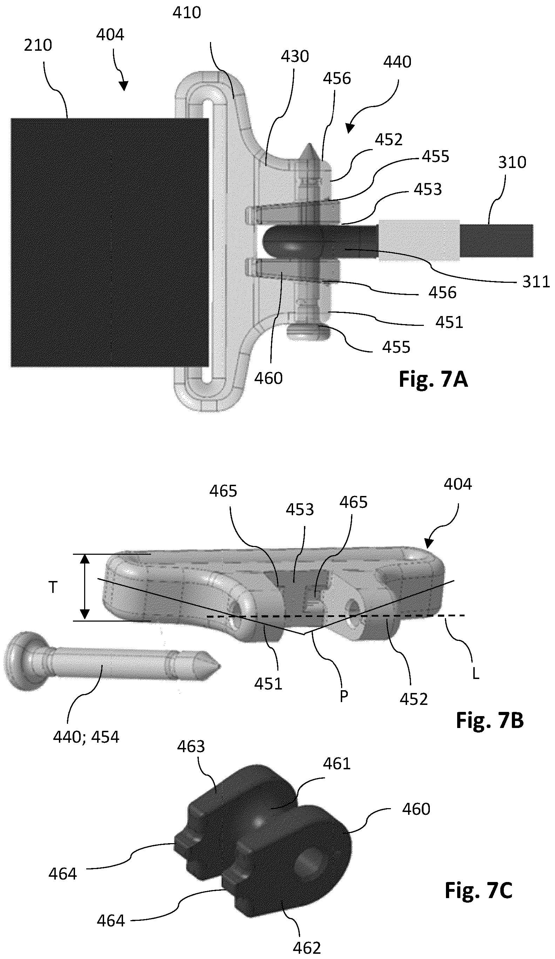

Now turning to Figs. 7A-7C, the design and operation of a fourth embodiment of the connector 404 according to the invention is schematically disclosed. Starting with Fig. 7A a top view of the connector 404 is shown together with a schematically disclosed portion of a belt 210 and a cord 310.

The connector 404 is formed as a unitary body which comprises a belt connecting portion 410 and a cord connecting portion 430. The belt connecting portion 410 has the same design that has been discussed above with reference to Figs. 4A-4C and is thereby not further discussed.

The connector 404 differs from the previously described embodiments in that the cord connecting portion 430 comprises a locking system 440 with a first channel 451 and a second channel 452. The first and second channels 451, 452 are aligned one after the other. The cord connecting portion 430 comprises a cut-out 453 that forms a gap that longitudinally separates the first and second channels 451, 452. Each channel 451, 452 has an insert opening 455 and an exit opening 456. The exit opening 456 of the first channel 451 is facing the insert opening 455 of the second channel 452.

The locking system 440 further comprises a locking pin 454, see Figs. 7A and 7B. The locking pin 454 is configured to be inserted through the first channel 451, through the loop-shaped end portion 311 of the cord 310 and through the second channel 452 to thereby lockingly engage the loop-shaped end portion 311 of the cord 310 to the connector 404. The connection of the cord 310 to the connector 404 is accordingly in this embodiment made by means of a locking pin 454 that is arranged to extend through the two channels 451, 452 and the intermediate loop-shaped end portion 311 of the cord 310. Thereby a hinge-like connection is formed between the connector 404 and the cord 310. Due to the orientation of the channels 451, 452, the locking pin 454 will extend transverse the longitudinal direction of not only the connector 404 but also the belt 210 and the cord 310. It will thereby not negatively impact the ability of the interconnected members to conform to the vehicle seat.

As noted, the belt 210 and the loop-shaped end portion 311 of the cord 310 will extend in different geometrical planes. The planes are substantially orthogonal to each other.

The locking system may further comprise an insert 460, see Figs. 7A and 7C. The insert 460 is configured to be connected to the loop-shaped end portion 311 of the cord 310, and the locking pin 454 is configured to be inserted through the first channel 451, through the insert 460 and through the second channel 452 to thereby lockingly engage the cord 310 to the connector 404. The insert 460 may be omitted with remained functionality.

The insert 460 may be supplied to an installation site pre-mounted to the loop-shaped end portion 311 of the cord 310.

Now specifically turning to Figs. 7A and 7C. The insert 460 is disclosed as comprising a hollow bushing 461 that is configured to extend through the loop-shaped end portion 311 of the cord 310. The locking pin 454 is configured to extend through said hollow bushing 461.

The disclosed embodiment of the insert 460 comprises a first flange 462 and a second flange 463. One end of the bushing 461 may be fixedly connected to the first flange 462 and a second end of the bushing may be configured to be connected to the second flange 463 by a snap-fit coupling. The insert 460 with its two flanges 462, 463 and bushing 461 may alternatively be formed as one unitary member by injection moulding or even machining. This requires that a free end of the cord 310 to be wrapped around the bushing before forming the loop-shaped end portion 311.

The disclosed embodiment of the insert 460 further comprises a pair of protrusions 464 that are configured to be received in a pair of complementary recess 465 in the cord connecting portion 430 of the connector 404. The skilled person realises that the number of protrusions 464 and recesses 465 may be changed with remained functionality. Also, the positions thereof may be changed. Hence, the insert 460 may comprise at least one recess configured to receive a complementary protrusion in the cord connecting portion 430 of the connector. The engagement between the protrusion(s) and recess(es) facilitates the mounting of the cord to the connector during the insertion of the locking pin. The one or more protrusions may be configured to engage the one or more recesses by a snap-fit to thereby hold the insert in position at least during mounting of the locking pin.

The channels 451, 452 are preferably positioned so that their longitudinal centrelines L coincides with a virtual plane P that is arranged in level with half of the thickness T of the belt connecting portion 410. This is highly schematically illustrated in Fig. 7B.

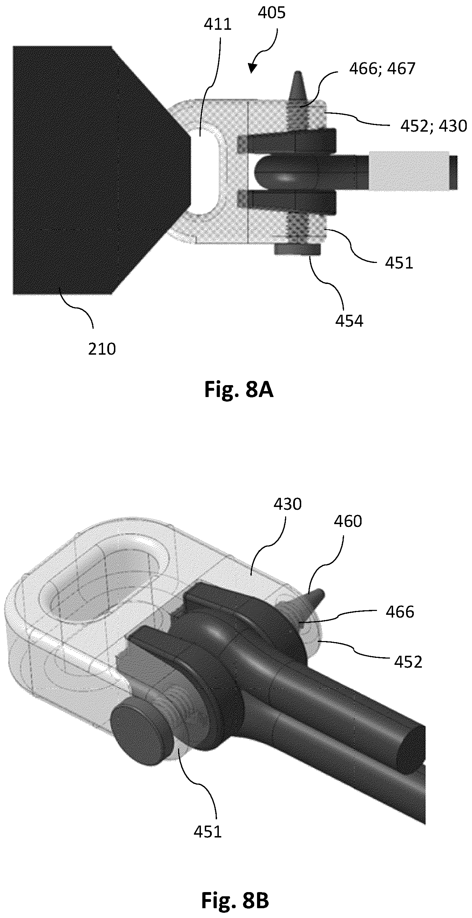

Now turning to Figs. 8A and 8B, the design of a fifth embodiment of the connector 405 according to the invention is schematically disclosed. The fifth embodiment differs from the fourth embodiment in the length of the slot 411 that is adapted to receive a belt 210 that has a locally reduced width. Also, the locking pin 454 is discloses as being provided with threads 466. The threads 466 are configured to be engage complementary threads 467 along the first and second channels 451, 452 of the cord-connecting portion 430. The overall design and functionality of the fifth embodiment of the connector 405 is the same as for the fourth embodiment. Reference is accordingly made to the previous discussion to avoid undue repetition.

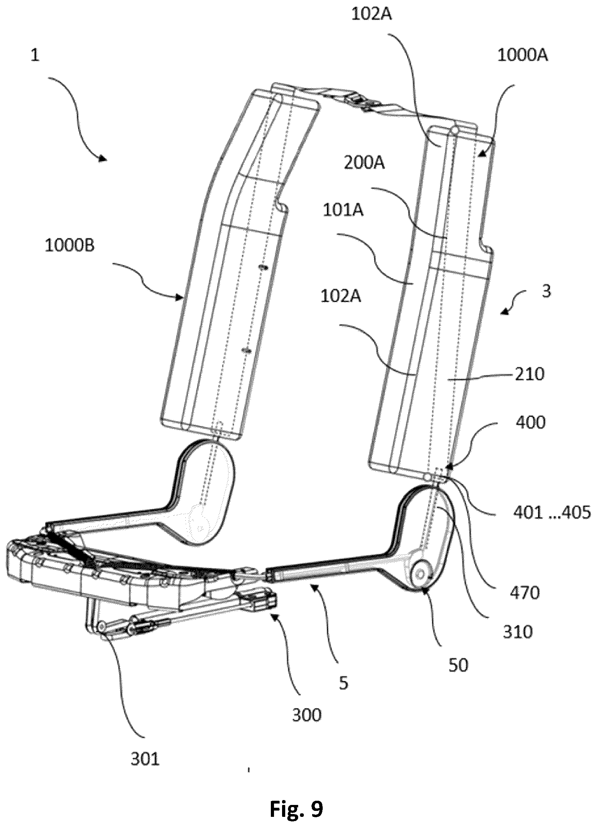

Now turning to Fig. 9, a schematic overview is disclosed of a safety system according to the invention as mounted to a vehicle seat. Typical features of the vehicle seat 1, all of them well known to the skilled person, such as the seat back, the upholstery, cushioning and the spring structure have been removed to facilitate the understanding. Since the seat-mounted airbag assemblies 1000A, 1000B on the two lateral sides of the vehicle seat are identical, only one assembly 1000A will be discussed in detail in the following unless nothing else is explicitly given.

The airbag assembly 1000A comprises a folded and/or rolled airbag 101A and a wrap-around restriction member 200A in the form of a belt 210, that extends across the airbag and that is configured to form a reaction surface upon inflation and deployment of the airbag. The airbag is contained in a casing 102A. The casing 102A comprises non-disclosed rupture lines to allow the airbag 101A to be deployed upon inflation. The casing can be omitted.

The tensioning device 300 is arranged at the seat pan 5. The tensioning device 300 is disclosed as being arranged underneath the vehicle seat 1 and may be supported either by the seat pan 5 or by the floor of the vehicle. The tensioning device 300 comprises an actuator which upon activation is configured to pull a tensioning member 301. The tensioning member 301 extends from the lower side of the seat pan 5, along a guide bracket 50 towards the seat back 3.

The free end of the belt 210. i.e. the wrap-around restriction member 200A, is connected to the belt-connecting portion of a connector 401-405 of the type that has been described above. Further, a free end of the tensioning member 301, i.e., the loop-shaped end portion 311 of the cord 310, is connected to the cord connecting portion 430 of said connector 401-405. Hence, the connector 401-405 interconnects the airbag assembly 1000A with the tensioning device 300.

The connector 401-405 with its different embodiments that have been described above allows the airbag assembly 1000A and the tensioning device 300 to be handled as separate units that are interconnected either before or during mounting to the vehicle seat. The airbag assembly 1000A may be contained prepacked, i.e. rolled and/or folded together with the wrap-around restriction member 200A in a casing 102A where the only portion protruding from the casing is a free end of the belt 210. i.e the free end of the wrap-around restriction member 200A, to which the belt connecting portion 410 of the connector 400 is attached. Correspondingly, the tensioning device 300 may be provided as one unit with the free end of the tensioning member 301 connecting to the cord connecting portion of the connector 401-405. The two units may be mounted separately to the vehicle seat in their spatially different locations, one typically along a longitudinal side portion of the seat back 2 and one typically below the seat pan 5.

It is preferred that the wrap-around restriction member 200A, i.e. the belt 210, and the tensioning member 301, i.e. the cord 310, have such lengths that the connector 401-405 can be arranged in such position that it does not interfere with the functionality of the vehicle seat or any guide brackets 50 that are used for guiding the tensioning member 301 from the seat panel 5 towards the seat back 3. The connector 400-405 is displaced in view of the guide bracket 50.

It is to be understood that each of the two airbag assemblies 1000A, 1000B can connect to an individual tensioning member 301. The two tensioning members 301 may connect to a common tensioning device 300. Hence, the wrap-around restricting member 200A of the first airbag assembly 1000A and the wrap-around restricting member 200B of the second airbag assembly 1000B may connect to a common tensioning device 300. The common tensioning device may be arranged centrally on the lower side of the seat pan or underneath the vehicle seat.

The tensioning device 300 may comprise an actuator and a pulling arrangement. The actuator may be a pyrotechnically operated piston which in one end is connected to the pulling arrangement. In the event an accident should be detected by one or more sensors of the vehicle and where the ECU (Electrical Control Unit) of the vehicle determines that the accident could be mitigated by the associated lateral airbag, the airbag is inflated while also the tensioning device is activated to tension the wrap-around restriction member to thereby form a reaction surface to the airbag as it is inflated and deployed.

## Claims

1. A connector (401-405) to be used in a safety system to be mounted on a vehicle seat, the connector (401-405) comprising a belt connecting portion (410) and a cord connecting portion (430);
said belt connecting portion (410) comprising a through-going slot (411) configured to receive a belt (210); and
said cord connecting portion (430) forming part of a locking system configured to connect a loop-shaped end portion (311) of a cord (310) to the connector (401-405).

2. The connector according to claim 1, wherein the cord connecting portion (430) comprises a first member (431) and a second member (432), said second member being configured to be arranged to overlap the first member and to be fixated to the first member to thereby secure the loop-shaped end portion (311) of the cord (310) to the connector (401-405) in an interface between the first member and the second member.

3. The connector according to claim 2, wherein the first member (431) and/or the second member (432) comprises a groove (433; 433-1, 433-2), said groove being configured to receive at least a portion of the loop-shaped end portion (311) of the cord (310).

4. The connector according to claim 2, wherein the first and second members (431, 432) together are configured to define a cord receiving channel (434) having a width that exceeds a diameter of the cord (310) as measured along the loop-shaped end portion (311) of the cord (310).

5. The connector according to any of claims 2-4, wherein the second member (432) is hingedly connected to the connector (401-405), and wherein the second member (432) is configured to be secured to the first member (431) by a screw (441) and/or a snap-fit coupling (442) in a condition when the second member (432) is arranged to overlap the first member (431).

6. The connector according to any of claims 2-4, wherein the second member (432) is a member separate from the connector (401-405), and wherein the second member (432) is configured to be secured to the first member (431) by a screw (441) and/or a snap-fit coupling (442) in a condition when the second member (432) is arranged to overlap the first member (431).

7. The connector according to claim 1, wherein the locking system comprises a first channel (451) and a second channel (452) that are arranged in the cord connecting portion (430) of the connector (401-405), the first and second channels being aligned one after the other, and wherein the cord connecting portion (430) comprises a cut-out (453) that forms a gap that longitudinally separates the first and second channels; and
wherein the locking system further comprises a locking pin (446), said locking pin being configured to be inserted through the first channel (451), through the loop-shaped end portion (311) of the cord (310) and through the second channel (452) to thereby lockingly engage the cord (310) to the connector (401-405).

8. The connector according to claim 7, wherein the locking system further comprises an insert (460) to be connected to the loop-shaped end portion (311) of the cord (310), and wherein the locking pin (446) is configured to be inserted through the first channel (451), through the insert (460) and through the second channel (452) to thereby lockingly engage the cord (310) to the connector (401-405).

9. The connector according to claim 8, wherein the insert (460) comprises a hollow bushing (461) that is configured to extend through the loop-shaped end portion (311) of the cord (310), and wherein the locking pin (446) is configured to extend through said hollow bushing.

10. The connector according to claim 9, wherein the insert (460) comprises a first flange (462) and a second flange (463), and wherein one end of the bushing (461) is fixedly connected to the first flange and a second end of the bushing is configured to be connected to the second flange by a snap-fit coupling.

11. The connector according to any of claims 8-10, wherein the insert (460) comprises at least one protrusion (464) configured to be received in a complementary recess (465) in the cord connecting portion (430) of the connector (401-405); or
wherein the insert (460) comprises at least one recess (465) configured to receive a complementary protrusion (464) in the cord connecting portion (430) of the connector (401-405).

12. The connector according to claim 11, where the at least one recess (465) is configured to lockingly engage the protrusion (464) by a snap-fit coupling.

13. A safety system to be mounted on a vehicle seat, the safety system comprising:
an airbag assembly (1000A, 1000B) configured to be supported by a lateral side of a vehicle seat (1), said airbag assembly comprising a folded and/or rolled airbag (101A, 101B) and a wrap-around restriction member (200A, 200B) extending across the airbag and configured to form a reaction surface upon inflation and deployment of the airbag;
a tensioning device (300) comprising an actuator which upon activation is configured to pull a tensioning member (301); and
a connector (401-405) with the features according to any of claims 1-12, wherein the through-going slot (411) in the belt connecting portion (410) of the connector is configured to receive a belt (210) forming part of the wrap-around restriction member and wherein the cord connecting portion (430) of the connector (401-405) is configured to connect to a loop-shaped end portion (311) of a cord (310) being part of the tensioning member (301).

14. Use of a connector with the features according to any of claims 1-12 to interconnect a belt (210) with a cord (310), said belt and cord forming part of a safety system to be mounted on a vehicle seat (1).
